# EUROPEAN PATENT APPLICATION

(11) **EP 2 644 294 A1**
(43) Date of publication of application: **02.10.2013**
(21) Application number: 12823244.4
(22) Date of filing: 29.11.2012
(51) Int. Cl.: B21D 24/02, F16F 9/02

(54) **GAS PISTON CYLINDER DESIGN**

(30) Priority: 29.11.2011 ES 201131931
(71) Applicant: Técnicas Aplicadas de Presión S.L., E-01013 Vitoria-Gasteiz (Álava) (ES)
(72) Inventor: PÉREZ VILLAR, Emilio, E-01013 Vitoria-Gasteiz (Álava) (ES)
(74) Representative: Elzaburu Marquez, Alberto
(86) International application number: PCT/ES2012/070840
(87) International publication number: WO 2013/079759

(57) **Abstract**

Design of a gas cylinder-piston. A gas cylinder-piston device (10) comprising a body (1) as structure and a rod-piston (2) that moves within said body (1), the interior of the body (1) occupied by a compressible gas, acting on the design of the structure of the body (1) or on the design of the rod-piston (2), without adding additional elements, to provide the gas cylinder-piston device (10) with at least one leakage point for the gas within the body (1) in case of overstroke of the rod-piston (2) exceeding its nominal stroke within the body (1).

## Description

### FIELD OF THE INVENTION

This invention is related to a design for a gas cylinder-piston device that prevents incidents in case of overstroke of the piston.

### BACKGROUND

Gas compression devices are fluid machines constituted to increase the pressure and displace certain types of fluids known as compressible, such as gases and fumes, by means of an exchange of energy between the machine and the fluid.

The working fluid in such compression devices is a compressible fluid, which undergoes a significant change in its density and, generally, also in its temperature. Presently, such devices are widely used in a variety of engineering applications, with a variety of types in existence that vary in terms of their functioning and design. Compressors that feature axial movement through the use of axial displacement pistons are also known as cylinder-piston devices.

Said cylinder-piston devices comprise a rod-piston that moves inside a gas chamber, the chamber comprising a cylinder that acts as a housing (body) and a bushing which guides the movement of the aforementioned rod-piston. The movement of the rod-piston within the body compresses the gas inside. Said compressed gas, when released, produces energy that is exchanged with the fluid machine. Devices of this type are used in systems that require a moderate amount of power, such as die-casting and stamping systems.

In the aforementioned cylinder-piston devices there is the problem of exceeding the rod-piston's nominal stroke when it moves inside the body beyond the maximum value allowed by the device's design. In case of overstroke of the rod-piston, the device would be crushed, causing uncontrolled explosions.

Document ES 2146195 discloses a gas spring or cylinder-piston device comprising a safety body that is useful to prevent the risk of accidental release of the rod of the piston in case of accidental stroke of the piston beyond its nominal stroke, which could result in possible explosions in the cylinder-piston device due to overstroke of the rod of the piston, that would result in the compression of the structure of the device's liner, structurally damaging the cylinder. In these cases, the safety body is hammered by the piston, causing the compression chamber to be purged. The safety body comprises an specific design with a thinned portion that breaks when a pivot of the safety body is hammered by the piston in cases of overstroke. The problem with such solutions is that their design and geometry are complex, as well as the changes that need to be made to the body of the cylinder in order to prevent overstroke, which would affect costly, higher-precision designs, which may break down easily, and which cannot be serially incorporated into all of the cylinders produced. In addition, such solutions are usually implemented as modifications to the cylinder, adding yet one more additional element to it (the safety body). Incorporating this safety body creates an additional leakage point for the cylinder, something that should always be avoided.

It is known in the state of the art, for example in document US 2004/0113336 A1 an arrangement of a gas cylinder-piston comprising a safety valve located partially in the cylinder and partially in the piston, that connects with a discard chute that longitudinally crosses the piston, so that in case the piston is inserted into the cylinder chamber beyond a predetermined distance, the aforementioned valve opens, allowing pressurised gas to exit through the piston's discard chute. The problem with such solutions is its complex design which makes it necessary to act not only on the cylinder's structure, but also on the structure of the piston itself, which greatly complicates the design of the cylinder-piston arrangement, while at the same time making the cost thereof high. In addition, current cylinder design is based on current automotive standards that expressly prohibit valves in the rod-piston.

It would therefore be desirable to create a gas cylinder-piston that prevents incidents in case of overstroke of the piston, in a way that it would only act on one of the elements forming the device, without having to add a new additional element.

This invention is focused on meeting these objectives.

### SUMMARY OF THE INVENTION

Thus, this invention provides a gas cylinder-piston device that prevents incidents in case of overstroke of the rod-piston, acting only on one of the elements forming this device, without adding additional elements.

The cylinder-piston device of the invention comprises a body serving as an external housing, wherein a rod-piston moves axially to a point of maximum displacement called nominal stroke, such that the body confines within a compressible gas in such a way that when the rod-piston moves in the body, decreasing the volume occupied by said gas in the body, the gas is compressed.

The device of the invention offers a solution to the current problems that arise from exceeding the nominal stroke of the rod-piston within the body wherein it moves beyond its maximum value. Thus, acting either on the design of the structure of the body or on the design of the rod-piston, without adding additional elements, to provide the gas cylinder-piston device with at least one leakage point for the gas within the body in case of overstroke of the rod-piston, exceeding its nominal stroke within the body.

According to a first embodiment of the invention, the cylinder-piston device comprises a protrusion in the lower part of the rod-piston, such that said protrusion, when the cylinder-piston is working under normal conditions, performs no function whatsoever. However, the aforementioned protrusion of the rod-piston is designed so that, in case of overstroke of the rod-piston, surpassing its nominal stroke within the body, would result in cramming of the protrusion of the rod-piston into the base of the body, which would result in gas leakage through the weakest areas of the body, such as the stud holes of the structure of the cylinder, which in accordance with current standards must comprise the gas cylinders.

According to a second embodiment of the invention, the body comprises internally a diametral slot, further comprising an orifice or bore hole perpendicular to this internal diametral slot, thereby achieving a weakened area around the internal diametral slot and around the orifice or bore hole, such that said weakened area provides a rupture or leakage point with a determined reduced thickness. In case of overstroke of the rod-piston, exceeding its nominal stroke within the body, would cause the crushing of said weakened area, which would deform this weakened area until rupture of the rupture or leakage point provided by the orifice or bore hole, causing gas leakage from within the body.

The internal diametral slot is calculated so that, in comparison to any other outer and inner slots the body may have, it will be the first to absorb the excess stroke of the rod-piston by deforming, thus achieving the desired effect of gas discharge. Said internal diametral slot may have different shapes and sizes, and may be located at different heights on the body. Likewise, the reduced thickness created in the previous weakened area will always be greater than a minimum safety thickness.

According to a third embodiment of the invention, the rod-piston comprises an internal diametral slot such that, in case of overstroke of the rod-piston, exceeding its nominal stroke within the body, when block hitting against the bottom of the body, a localised deformation occurs in a weakened area around the internal diametral slot, which in turn causes, as the gas causes the rod-piston to return to its initial position, damages to a dynamic sealing gasket located between the piston and a bushing that guides the movement of the aforementioned rod-piston, consequently causing gas leakage from within the body.

### BRIEF DESCRIPTION OF THE FIGURES

The following objects and many of the advantages of this invention will be more readily appreciated as the former is better understood by reference to the following detailed description along with the accompanying figures, where:
Figure 1 shows a cross-sectional view of a first embodiment of the gas cylinder-piston device of the invention.
Figure 2a shows a cross-sectional view of a first embodiment of the gas cylinder-piston device of the invention, when the rod-piston reaches the end of its nominal stroke.
Figure 2b shows a detailed view of the protrusion of the rod-piston from Figure 2a.
Figure 3a shows a cross-sectional view of a first embodiment of the gas cylinder-piston device of the invention, when the rod-piston has exceeded its nominal stroke.
Figure 3b shows a detailed view of the protrusion crammed into the structure of the body from Figure 3a, showing also purging of the gas of said structure.
Figures 4a, 4b and 4c show cross-sectional detailed views of a second embodiment of the gas cylinder-piston device of the invention, as well as its mode of operation in case of overstroke of the rod-piston.
Figures 5a, 5b, 5c, 5d and 5e show cross-sectional detailed views of a third embodiment of the gas cylinder-piston device of the invention, as well as its mode of operation in case of overstroke of the rod-piston.

### DETAILED DESCRIPTION OF THE INVENTION

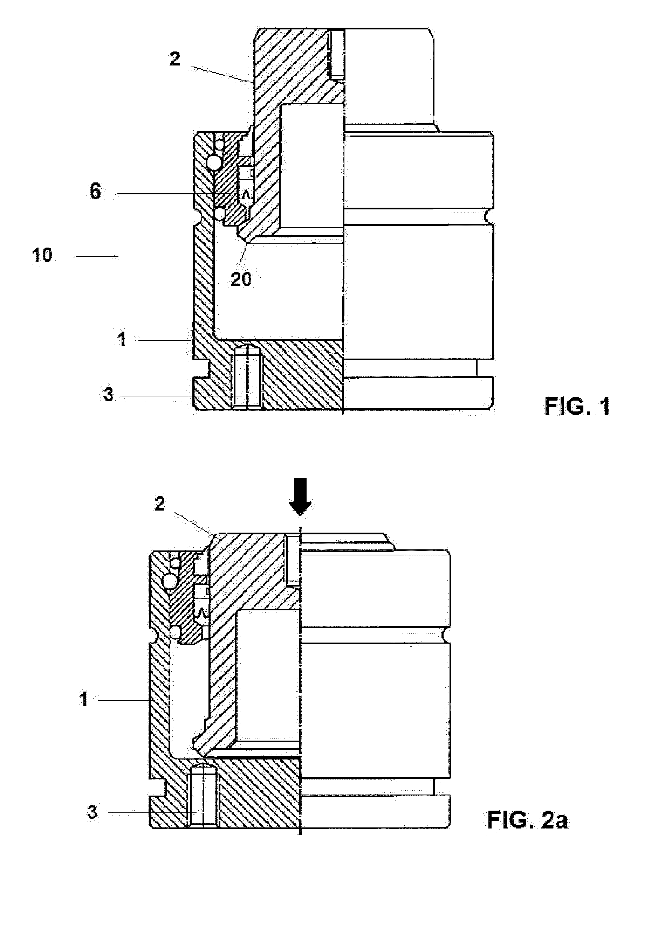

According to the invention, the gas cylinder-piston device 10 comprises (see, for example, Figure 1) a structure, housing or body 1 inside of which a rod-piston 2 moves, being the interior of said body 1 occupied by a compressible gas. In the *first embodiment* shown in Figure 1, elements 3 represent stud holes of the structure of the body 1. The cylinder-piston device 10 comprises in the lower part of the rod-piston 2 at least one protrusion 20.

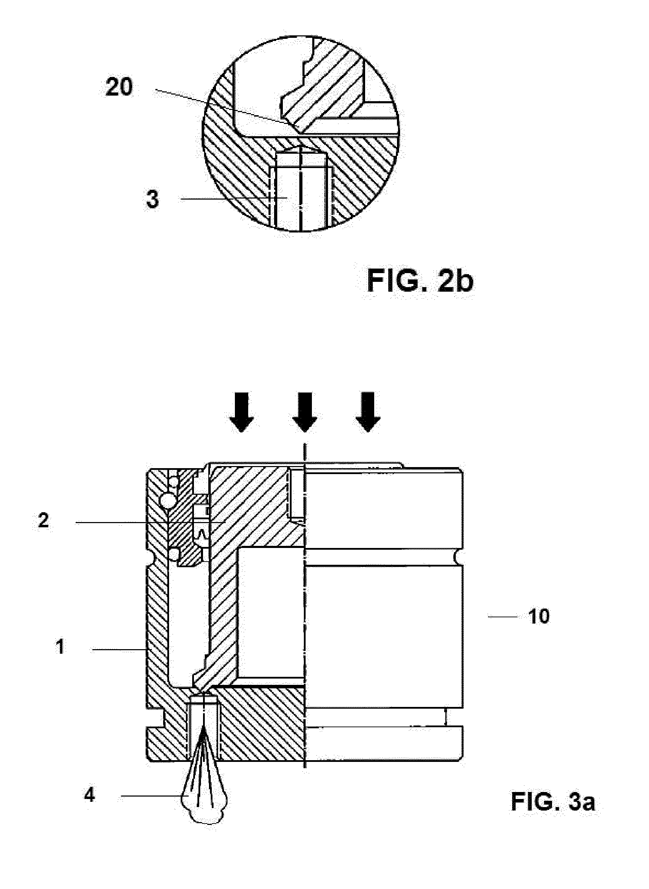

The maximum displacement of the rod-piston 2 within the body 1 is called nominal stroke, as shown in Figure 2a. According to the invention, when the rod-piston 2 is working under normal conditions and within its nominal stroke, the protrusion 20 performs no function whatsoever, as can be seen in the detail of Figure 2b.

Nevertheless, the protrusion 20 of the rod-piston 2 is designed so that, in case of overstroke of the rod-piston 2 (due for example to small external elements, sheet bending or other causes), exceeding its nominal stroke within the body 1, cramming of the protrusion 20 of the rod-piston 2 into the base of the body 1 occurs, causing gas 4 leakage through the weakest areas of the body 1, preferably through the stud holes 3, through which the cylinder-piston device 1 is attached to the support structure.

The protrusion 20 of the rod-piston 2 of the gas cylinder-piston device 10 has preferably, according to the invention, angle shape, that can perforate the body 1 in case of overstroke of the rod-piston 2. In addition, the protrusion 20 is preferably aligned with some of the elements 3 of the body 1 through which gas leaks in case of overstroke.

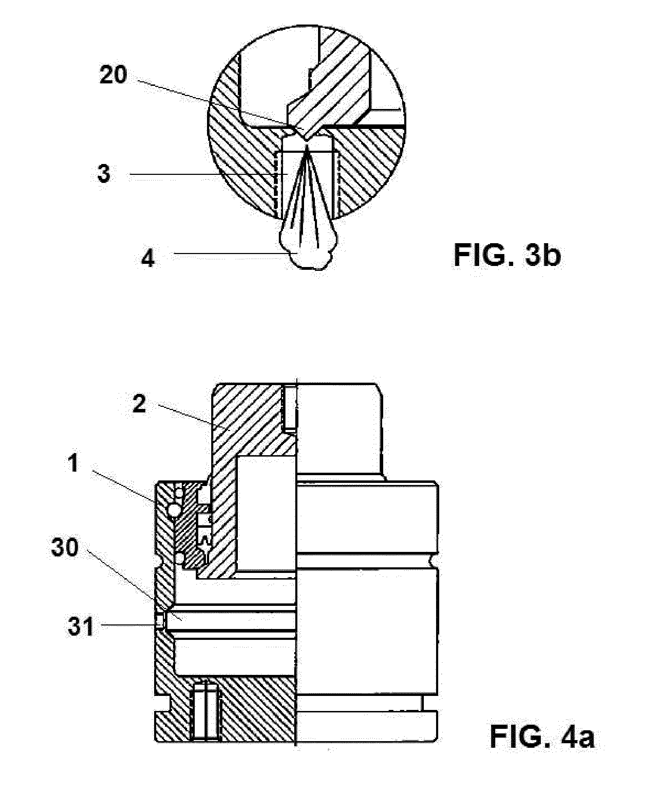

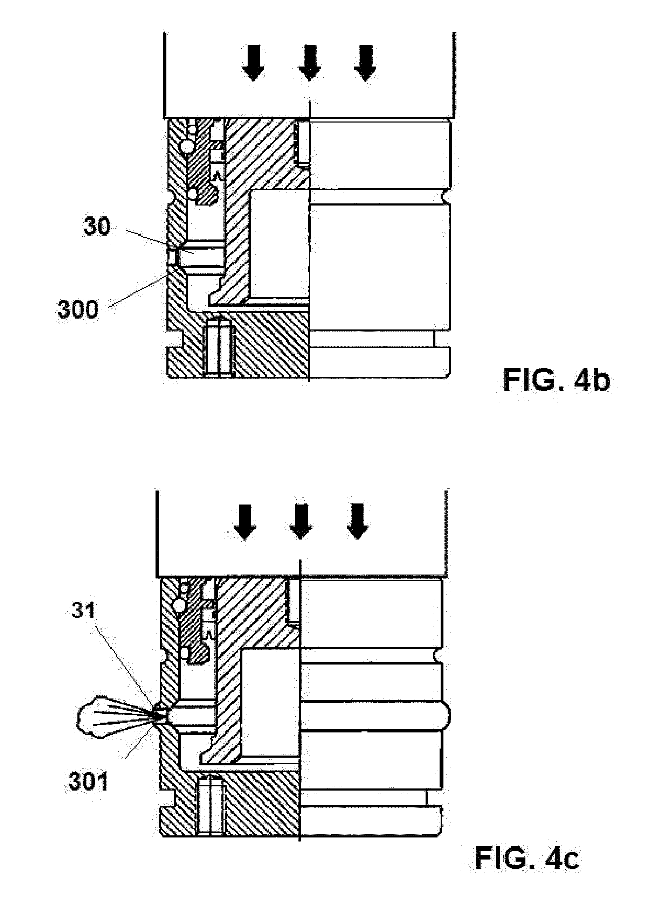

According to *a second embodiment* of the invention as shown in Figures 4a, 4b and 4c, the body 1 comprises internally an internal diametral slot 30, further comprising externally said body 1 an orifice or bore hole 31, leaving this point with the internal diametral slot 30 with a determined thickness, that is, a weakened area 300 is achieved around the internal diametral slot 30 and around the orifice or bore hole 31, such that said weakened area 300 provides a rupture or leakage point 301 with a determined reduced thickness. In case of overstroke of the rod-piston 2, exceeding its nominal stroke within the body 1, the body 1 is compressed so that the weakened area 300 of the body 1, which corresponds to the opening 31, deforms until its rupture, thus causing gas leakage from within the body 1 (see Figure 4c).

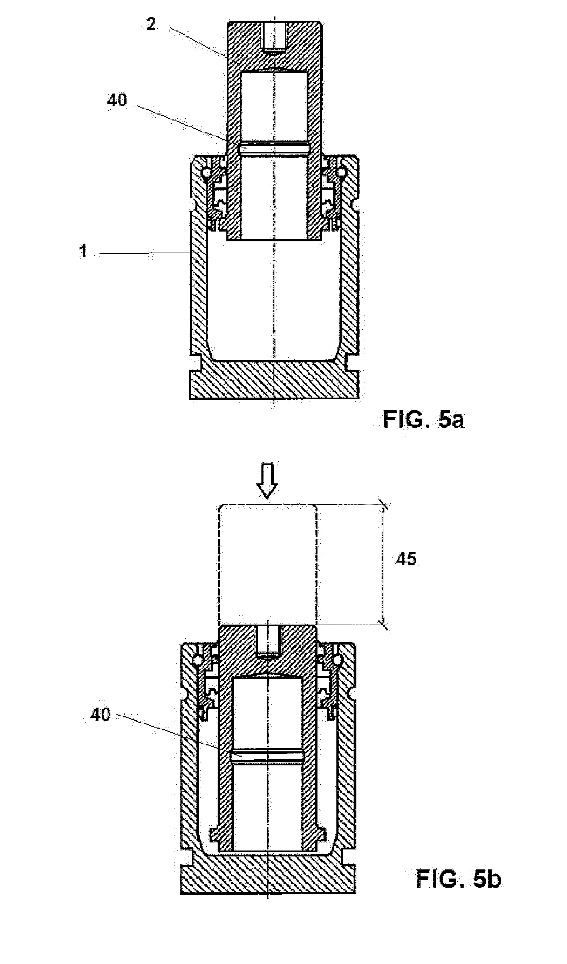

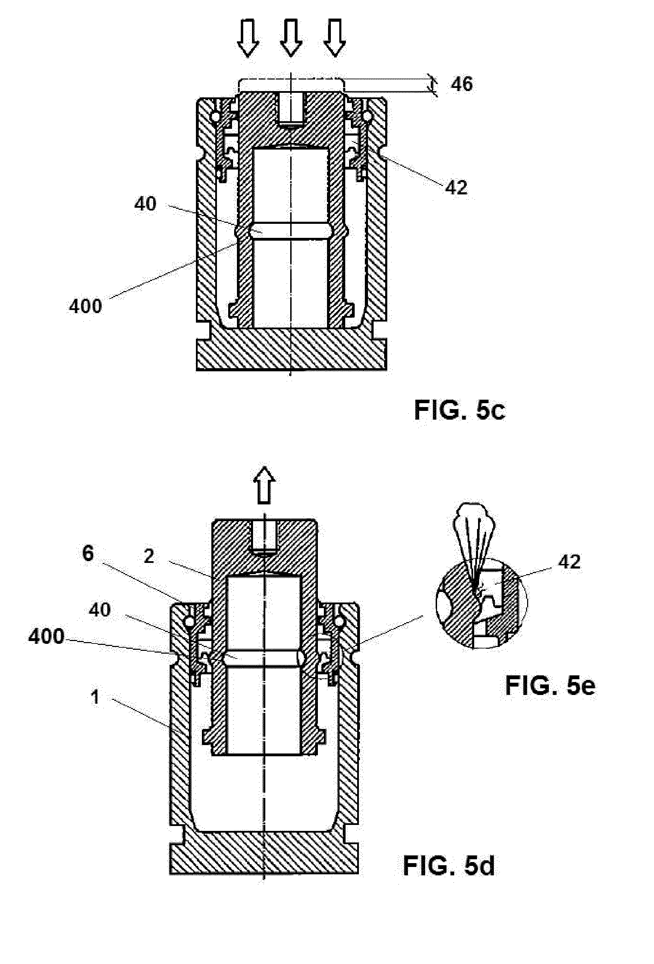

According to a *third embodiment* of the invention shown in Figures 5a - 5e, the rod-piston 2 comprises an internal diametral slot 40 so that, in the case of an overstroke 46 of the rod-piston 2, exceeding its nominal working stroke 45 within the body 1, when the rod-piston 2 block hits against the bottom of the body 1, an outward deformation occurs localised in a weakened area 400 around the internal diametral slot 40, in turn causing a deformation in a dynamic sealing gasket 42 (see detail of Figure 5e), located between the rod-piston 2 and a bushing 6 that guides the aforementioned movement of the rod-piston 2 within the body 1, as the gas causes the rod-piston 2 to return to its initial position, consequently causing gas leakage from within the body 1. In this embodiment, the weakened area 400 of the rod-piston 2 with the internal diametral slot 40 acts as a crumple zone in the device 10.

Although this invention has been described here entirely in connection with preferred embodiments, it is evident that modifications could be introduced within the scope of, without said scope being limited by these embodiments, the contents of the following claims.

## Claims

1. A gas cylinder-piston device (10) comprising a body (1) as structure and a rod-piston (2) that moves within said body (1), the interior of the body (1) occupied by a compressible gas, **characterised in that** acting on the design of the structure of the body (1) or on the design of the rod-piston (2), without adding additional elements, to provide the gas cylinder-piston device (10) with at least one leakage point for the gas within the body (1) in case of overstroke of the rod-piston (2) exceeding its nominal stroke within the body (1).

2. The gas cylinder-piston device (10) according to claim 1 **characterised in that** the rod-piston (2) comprises at least one protrusion (20) in its lower part, designed so that, in case of overstroke of the rod-piston (2) exceeding its nominal stroke within the body (1), the at least one protrusion (20) of the rod-piston (2) is crammed into the body (1), such that pressurised gas leaks through elements (3) of the body (1).

3. The gas cylinder-piston device (10) according to claim 2, wherein the elements (3) comprise stud holes of the structure of the cylinder (1).

4. The gas cylinder-piston device (10) according to any of claims 2-3, wherein at least one protrusion (20) of the piston (2) has angle shape that can perforate the body (1) in case of overstroke of the rod-piston (2).

5. The gas cylinder-piston device (10) according to any of claims 2-4, wherein at least one protrusion (20) of the rod-piston (2) is longitudinally aligned with the vertical axis of some of the elements (3) of the cylinder (1).

6. The gas cylinder-piston device (10) according to claim 1, **characterised in that** the body (1) comprises an internal diametral slot (30) and an external bore hole (31) so that there is a weakened area (300) around the internal diametral slot (30) and the bore hole (31) with a determined thickness so that, in case of overstroke of the rod-piston (2), deformation of the weakened area (300) occurs, until rupture of the body (1) through the bore hole (31) allowing outward gas leakage.

7. The gas cylinder-piston device (10) according to claim 1, **characterised in that** the rod-piston (2) comprises an internal diametral slot (40) so that, in case of overstroke of the rod-piston (2), an outward deformation of the internal diametral slot (40) occurs which, when returning to its resting state, in turn causes deformation of a dynamic sealing gasket (42) situated in between the rod-piston (2) and a bushing (6), thus causing gas leakage from within the body (1) toward the exterior.

8. The gas cylinder-piston device (10) according to any of the previous claims, for use in die-casting or stamping processes.
